# EUROPEAN PATENT APPLICATION

(11) **EP 1 657 730 A2**
(43) Date of publication of application: **17.05.2006**
(21) Application number: 05024195.9
(22) Date of filing: 07.11.2005
(51) Int. Cl.: H01G 9/058

(54) **Electrode sheet and electric double layer capacitor using the same**

(30) Priority: 15.11.2004 JP 2004329968
(71) Applicant: MITSUBISHI GAS CHEMICAL COMPANY, INC., Chiyoda-ku, Tokyo (JP); JAPAN PIONICS CO., LTD., Minato-ku, Tokyo (JP)
(72) Inventor: Kanbara, Yutaka, Mitsubishi Gas Chemical Co., Inc, Tayuhama, Niigata-shi, Niigata (JP); Morohashi, Kenji, Mitsubishi Gas Chemical Co., Inc, Tayuhama, Niigata-shi, Niigata (JP); Okada, Kimio, c/o Ryoyu Industrial Corp., Itakura-ku, Joetsu-shi, Niigata (JP); Higuchi, Yasumitsu, c/o Japan Pionics Co., Ltd., Minato-ku, Tokyo (JP); Koiso, Yasuhiko, c/o Japan Pionics Co., Ltd., Minato-ku, Tokyo (JP); Yada, Koichi, c/o Japan Pionics Co., Ltd., Hiratsuka-shi Kanagawa (JP)
(74) Representative: Leifert & Steffan

(57) **Abstract**

An electrode sheet (16) which is made by applying a coating solution prepared by dispersing graft polymer which is obtained by graft polymerizing an organic monomer and at least one of activated carbon and carbon black into a solvent over surfaces of a collector followed by drying and heat-treating. An electric double layer capacitor having a constitution of laminating a separator and the electrode sheet (16). An electrode sheet produced by forming polarizable electrodes strongly at ease over surfaces of collectors such as metal foil (17) whose adhesion strength between the collector and the polarizable electrode hardly decreasing even by gases generated with repetition of charging and discharging electricity, oscillation or so and further, capable of maintaining characteristics such as internal resistance and so on favorably for a long term is provided.

## Description

### TECHNICAL FIELD

The present invention relates to an electric storage medium such as an electric double layer capacitor or so. More particularly, the present invention relates to an electrode sheet for forming polarizable electrodes by applying a coating solution over the surfaces of a collector such as a

### BACKGROUND ART

Late years, electric double layer capacitors formed of polarizable electrodes such as activated carbons or so being impregnated with a non-aqueous electrolytic solution and storing electric energy into their interfacial electric double layers are becoming to be used practically as electric storage media. As a general constitution of the electric double layer capacitors, an electrode sheet mainly consisting of a collector such as a metal foil or so and a polarizable electrode such as activated carbons or so and a separator are laminated alternately each other, with a constitution of further being impregnated with a non-aqueous electrolytic solution to form an electric double layer capacitor cell, which is tightly sealed in a container to obtain the electric double layer capacitors.

Further, with regard to a production of the electric double layer capacitors, it is practically carried out that a laminated article of the electrode sheet and the separator is formed as a sandwiched shape in a rectangular type and is formed as a roll shape in a cylindrical type, connecting lead portions of the collectors (a positive electrode and a negative electrode) with each terminals respectively, packing the laminated article into a container, followed by injecting the electrolytic solution from the opening aperture of the container resulting in impregnating the electrolytic solution to the laminated article, and sealing the container in the state of exposing the leading ends of the electrode terminal outside the container.

In the electric double layer capacitors, the electrode sheet is generally produced by applying a coating solution containing activated carbons over surfaces of a collector such as a metal foil or so and drying, thereby forming polarizable electrodes. Conventionally, a coating solution prepared by dispersing activated carbons and an electrically conducting material such as carbon black and a binding agent such as polytetrafluoroethylene, cellulose or so either into an organic solvent or into an inorganic solvent is frequently used. However, a constituting component, a coating method or so is an essential factor extremely affecting whether or not improves an important property such as an internal electric resistance of the electric double layer capacitors. Accordingly, aiming superiority in homogeneity, adhesion strength and so on, a binding agent component in the coating solution, a method for tightly adhering the coating solution on to the collector, etc., are particularly developed in many numbers recently. For example, the following patent applications are published.

Namely, Japanese Unexamined Patent Application Laid-Open No. Hei 11-162794 discloses a coating solution comprising copolymerization latex containing aromatic vinyl unit and conjugated diene unit; Japanese Unexamined Patent Application Laid-Open No. Hei 11-329904 discloses a coating solution comprising carbon material and polytetrafluoroethylene dispersed in an organic solvent; and Japanese Unexamined Patent Application Laid-Open No. 2002-222741 discloses a coating solution comprising activated carbon powders, electro-conductivity endowing agent having smaller particle diameter than the activated carbon powders and resin all dissolved into a water soluble binder. Further, Japanese Unexamined Patent Application Laid-Open No. 2001-222992 discloses a method for forming polarizable electrodes over the surfaces of a collector by means of evaporating a solvent in a coating solution with radiating infrared ray; and Japanese Unexamined Patent Application Laid-Open No. 2001-345095 discloses a method for forming polarizable electrodes over the surfaces of a collector by means of evaporating a solvent in a coating solution with blowing a warm wind.

Among the convenient coating solutions that were practical, favorably homogeneous coating solutions were with slurry states in which activated carbons, carbon blacks and so on were homogeneously dispersed in solvents. In a case where these coating solutions are maintained as slightly viscous, it seems that they may be relatively well permeable even into valleys on the rough surface of etched metal foils, that were preferably used as collectors. However, in whatever the kind of the coating solution, the activated carbons, carbon blacks and so on dispersed in the solvents easily cohere mutually, and each particle will resultantly grow to a state of relatively large lump. Accordingly, there was disadvantage that when these coating solutions were directly used, any electrode sheet having superior adhesion strength between the collector and the polarizable electrode was not obtainable. Furthermore, there was also a disadvantage that gases generated with repetition of charging and discharging electricity, oscillation or so when they used in automobiles caused separation between the collector and the polarizable electrode, thereby degrading characteristics such as internal resistance and so on in a short term.

In order to overcome such a problem, for example, Japanese Unexamined Patent Application Laid-Open No. 2001-216956 proposes a method of disposing powders of binding agent, preferably those with smaller diameters than the averaged aperture diameter of valleys on the rough surface of the metal foil in a state of powders without containing solvent, subsequently applying a paste, i.e., a coating solution containing active substances such as activated carbons and a solvent over them, followed by drying. However, such coating method has disadvantages that a number of production steps increase and it is also troublesome.

### DISCLOSURE OF THE INVENTION

Therefore, an object of the present invention is to provide an electrode sheet produced by forming the polarizable electrodes strongly at ease over surfaces of a collector such as metal foil whose adhesion strength between the collector and the polarizable electrode is hardly decreasing even by gases generated with repetition of charging and discharging electricity, oscillation or so and further, capable of maintaining characteristics such as internal resistance and so on favorably for a long term. Another object of the present invention is to provide an electric double layer capacitor with the use of the electrode sheet.

As a result of intensive extensive research and investigation made by the present inventors in order to achieve the object, it has been found that each of activated carbons and carbon blacks are independently capable of being graft polymerized with an organic monomer; that the graft polymer thus obtained is hardly cohere mutually, with unreacted activated carbons or with carbon blacks and resultantly each particles will finely disperse in a solvent; that a coating solution containing the above graft polymer is extremely superior in wetting property with the surfaces of the metal foil; that employing the coating solution remarkably enhance an adhesion strength between the collector and the polarizable electrode; etc., and the present invention was completed.

Namely, the present invention provides an electrode sheet which is made by applying a coating solution prepared by dispersing a graft polymer which is obtained by graft polymerizing an organic monomer and at least one of activated carbon and carbon black into a solvent over surfaces of a collector followed by drying and heat treating. The present invention also provides an electric double layer capacitor having a constitution of laminating a separator and the above electrode sheet impregnated with a non-aqueous electrolytic solution.

### BRIEF DESCRIPTION OF THE DRAWINGS

FIG. 1 is a schematic diagram showing an embodiment of a coating apparatus for applying a coating solution over the surfaces of a metal foil in production of the electrode sheet of the present invention;
FIG. 2 is a plan view showing an embodiment of a coated portion of the electrode sheet where a coating solution was applied over the surfaces of a metal foil in the present invention; and
FIG. 3 is a plan view showing an embodiment of an electric double layer capacitor in accordance with the present invention.

### THE PREFERRED EMBODIMENT TO CARRY OUT THE INVENTION

The electrode sheet of the present invention is applicable to an electrode sheet for forming polarizable electrodes by applying a coating solution over the surfaces of a collector (or an electrode) such as a metal foil (or a metal) or so. The electric double layer capacitor of the present invention is applicable to a double layer capacitor with the use of an electrode sheet for forming polarizable electrodes by applying a coating solution over the surfaces of a collector such as a metal foil or so. In particular, the electric double layer capacitor of the present invention is preferably applied to an electric double layer capacitor for a dedicated use to automobiles because it has high adhesion strength which is resistant against vibration. Further, the electric double layer capacitor of the present invention is applicable for either a rectangular type electric double layer capacitor or a cylindrical tube type electric double layer capacitor.

Any one of a furnace black, an acetylene black, a channel black, a thermal black, etc., may be employed as the carbon black in the present invention. Further, as the activated carbon, a palmhusk charcoal, a slack charcoal, a peat charcoal or so each activated with water vapor or carbon dioxide, and an alkali activated charcoal prepared by activating an easily graphitable carbon with alkali metal compound are employable. The easily graphitable carbon as a material for the alkali activated charcoal may be obtained by carbonizing petroleum pitch, coal pitch, synthesized pitch obtainable by polymerizing condensed polycyclic hydrocarbons or needle cokes, however, any activated carbon may be employed. With regards to the specific surface of the activated carbons in the present invention, its value is usually 10 m²/g or greater, preferably 50 m²/g or greater, further preferably 200 m²/g or greater.

Further, regarding with the organic monomer, it is not particularly specified so long as it generates carbon black-graft polymer by graft polymerization reaction, and examples include acryl-based monomer, epoxy-based monomer, vinyl-based monomer, ester-based monomer, amide-based monomer, ether-based monomer, etc. It is preferable to employ vinyl-based monomer among the above organic monomers. The vinyl-based monomer means an unsaturated carboxylic acid and its esters, etc., that are represented by a following general formula:

CH₂=C(R)-COOR'

wherein R represents a hydrogen atom or a methyl group, R' represents a hydrogen atom or a hydrocarbon group having 1 to 12 carbon atoms or a substituted hydrocarbon group. Specific examples of the vinyl-based monomer include acrylic acid, methacrylic acid, methylacrylate, methyl methacrylate, ethylacrylate, ethyl methacrylate, 2-hydroxyethyl acrylate, 2- hydroxyethyl methacrylate, 2-hydroxypropyl acrylate, 2- hydroxypropyl methacrylate, butylacrylate, butylmethacrylate, 2- ethylhexyl acrylate, 2-ethylhexyl methacrylate, octyl acrylate, octyl methacrylate, laurylacrylate, lauryl methacrylate, etc.

Further, the coating solution in the present invention may comprise a resin. Although the resin is not particularly specified so long as an effect of a binder is revealed, a thermosetting resin is preferable, and employable examples of which include epoxy resin, phenol resin, polyester resin, melamine resin, urea resin, alkyd resin, polyimide resin, etc. Further, the coating solution in the present invention may further comprise graft polymers obtained by graft polymerizing organic monomers and synthesized pitches obtained by polymerizing either condensed polycyclic hydrocarbons or compounds comprising it in order to enhance its binding capacity. The organic monomer employed in this case is the same as the foregoing organic monomer. In the present invention, the above resin or graft polymer is usually added.

Additionally, as described in Japanese Registered Patent Nos. 2931593, 2621253 and 2526585, the above synthesized pitch is obtained by polymerizing naphthalene, monomethyl naphthalene, dimethylnaphthalene, anthracene, phenanthrene, acenaphthene, acenaphthylene, pyrene and so on, a condensed polycyclic hydrocarbon having these backbone structure, these mixture and a substance which contains these. The polymerization is carried out by employing both hydrogen fluoride in an amount of 0.1 to 20 mole and boron trifluoride in an amount of 0.05 to 1.0 mole as polymerization catalyst per 1 mole of the pitch material, and by reacting at the temperature of 100 to 400 °C for 5 to 30 minutes. The synthesized pitch exhibits an enhanced flowing ability and much carbon residues at the temperature within the above heat treatment range.

Any solvent capable of both favorably dispersing activated carbon, carbon black, grafting polymer, etc., and easily volatilizing among a dryer in a coating machine is employed in the present invention, and the examples include aliphatic alcohols such as propyl alcohol, isopropyl alcohol, butyl alcohol, etc.; ketones such as methyl isobutyl ketone, methyl ethyl ketone, etc.; aromatic hydrocarbons such as benzene, toluene, xylene, etc.; aromatic hydrocarbons containing nitrogen such as pyridine, etc.; aliphatic hydrocarbons such as pentane, hexane, etc.; alicyclic hydrocarbons such as cyclohexane, etc.; ethers such as tetrahydrofuran, etc.; and cellosolves such as ethylene glycol monomethyl ether, ethylene glycol monoethyl ether, etc. The organic solvent may be used alone or in combination with two or more kinds thereof. Further, for example, a coating solution comprising an epoxy emulsion, an acryl emulsion or so with a use of an aqueous solvent may be employed in the present invention.

With regard to a polymerization initiator employed for the graft polymerization of the activated carbon and / or of the carbon black, an azo compound-based initiator is preferable and an azonitrile-based initiator is particularly superior in the present invention. However, organic peroxide is not preferable as the polymerization initiator because it causes very long induction period when the carbon blacks coexist. Because the carbon black in itself works as a radical polymerization inhibitor, sufficient amount for overcoming the inhibitor is required for the polymerization initiator; however, the amount is usually up to 5 % by weight per weight of the carbon blacks. Further, a chain transfer agent such as dodecyl mercaptan may be also optionally used.

The coating solution in the present invention is prepared by using the above-mentioned activated carbon, carbon black, organic monomer, solvent, etc. After placing the activated carbon, the carbon black, the organic monomer and solvent into a reaction vessel or so, the coating solution can be prepared by adding the polymerization initiator at once or dividing into several times at the temperature of around 50 to 200 °C, and by resultantly graft polymerizing. Further, in a case where only one component of the activated carbon or the carbon black is to be graft polymerized with the organic monomer, the coating solution may be prepared by adding the remaining component not to be graft polymerized into a solution after terminating graft polymerization.

Additionally, in a case where the coating solution is prepared by further adding a resin, a solvent dissolving (or, dispersing) the resin is to be added into the above-mentioned solution after terminating graft polymerization. Furthermore, in a case where synthesized graft polymers obtained by graft polymerizing organic monomers and synthesized pitches obtained by polymerizing either condensed polycyclic hydrocarbons or compounds comprising it is to be added to the coating solution, a solvent after dissolving (or, dispersing) the graft polymerized polymer of the synthesized pitch may be added into the solution after terminating graft polymerization of the activated carbon and / or the carbon black. The graft polymerization polymer of the synthesized pitch may be carried out simultaneously with the graft polymerization of the activated carbon and /or the carbon black.

In the present invention, the amount of the organic monomer is usually 10 to 200 % by weight, preferably 30 to 100 % by weight each of the total amount of the activated carbon and the carbon black. In the preparation of the coating solution, a graft polymerization factor of the organic monomer to the activated carbon and to the carbon black is each usually within a range of from 1 to 50 % of entire organic monomers in common, preferably within a range of from 2 to 30 % of entire organic monomers in common. When the graft polymerization factor is smaller than 1 %, either an anxiety of failing in preparing the coating solution of slurry type or an anxiety of failing in obtaining the coating solution superior in wetting property with a metal foil appears. Further, it is difficult to prepare a coating solution with the graft polymerization factor of exceeding 50 %. With regard to an amount of the grafting polymer of the activated carbon and / or the carbon black contained in the coating solution is usually 1 to 50 % by weight of the entire amount of the coating solution.

With regard to the viscosity of the coating solution, it is usually 10 to 1,000 mPas at room temperature. The coating solution of the present invention is not only finely and homogeneously dispersing the activated carbon, the carbon black and so on but also extremely superior in wetting property as compared with the conventional coating solution. The reason of the superiority is considered that the structure of the coating solution becomes hard to cohere owing to a chemical bonding of the organic monomer onto the surface of the activated carbon and / or the carbon black, which is defined as the graft polymerization in the present invention. The organic monomer impregnated into hyperfine valleys on the rough surface of the metal foil is heat-treated in the following step, carbonizes and as a result, adheres tightly with the metal foil.

The electrode sheet of the present invention is obtained by applying the above-mentioned coating solution over the surfaces of metal foil, drying and heat-treating. Before applying the coating solution over the surfaces of the metal foil, the coating solution may be diluted with a solvent such as ethylene glycol monomethyl ether, xylene, etc., in order to get a predetermined film thickness. Further, an optimum amount of an antifoamer may be added to the coating solution. Applying the coating solution over surfaces of the metal foil is carried out by means of a coating apparatus which provides a coating solution circulation division comprising a charge tank 2 for a coating solution 1, a feed pump 3 for the coating solution, a recovery pump 4 for overflowing and so on; a coating division comprising an unwinder 6 for a metal foil 5, dancer rollers 7 which form S-shaped advancing path for the metal foil and regulate its tension, a vat 8 for the coating solution, a coating roller 9, squeeze rollers 10 and so on; a drying division comprising an introduction inlet 11 for heat wind, an exhaust air duct 12 and so on; and a winder division comprising a thickness measuring instrument 13, rollers 14 for both heat pressing and regulating line speed, a winder 15 and so on. As the previous description, because the coating solution is excitingly homogeneous and extremely superior in wetting property, a coating thickness is capable of being precisely controlled at ease. Additionally, the electrode sheet after being wound may be heat-treated inside a heat processing furnace in the present invention. The temperature of the heat-treatment is ordinarily from 100 to 600 °C.

In the production of the electrode sheet of the present invention, the solvent is volatilized mainly by drying. Further, the functional group (-OH, - COOH, - C = O, etc.) remaining in the activated carbon, the carbon black and the synthesized pitch in among the coating solution, or generated in the graft polymerization reaction may be decomposed and removed by heat-treatment, together with enhancing tighter bonding of the carbon black, the activated carbon and the resin, and with carbonizing of the resin.

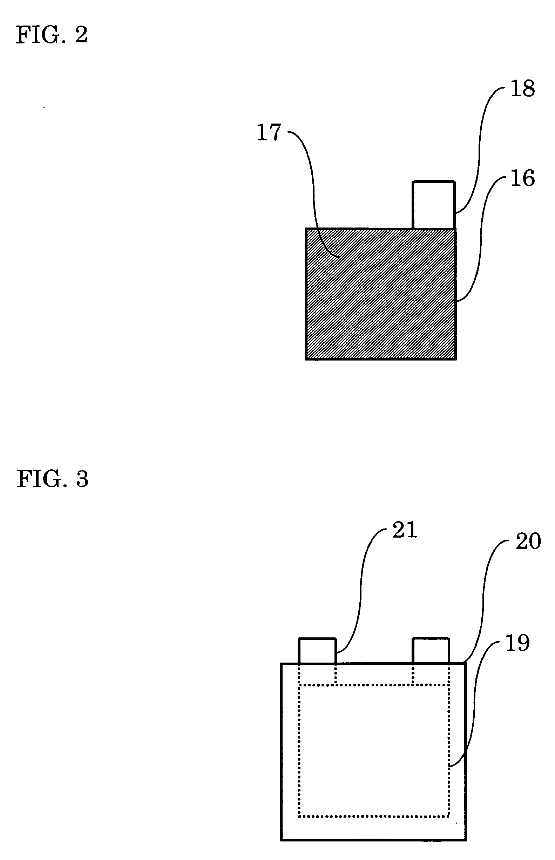

In the present invention, the coating solution is applied over both surfaces 17 of a metal foil excluding a portion to be usually a lead part 18 and the resultant foil is finished to an electrode sheet 16 as shown in FIG. 2.

The electric double layer capacitor in the present invention is fabricated with the use of the above-mentioned electrode sheet. In an occasion of laminating the electrode sheet and a separator in the present invention, they are laminated in a manner that lead parts 18 of both a positive electrode and a negative electrode possibly connect to positive and negative terminals 21 of each electrode terminal member. Then, a laminated article 19 is packed into a flat container 20 made of metal foil covered with a plastic film having an aperture in at least one side in a manner that the electrode terminals 21 are disposed at the aperture side. Additionally, in an occasion of fabricating the electric double layer capacitor, the laminated article is usually dried before an electrolytic solution is injected into the container, however, the drying step may be shortened or omitted in a case where the electric double layer capacitor is successively fabricated soon after the electrode sheet is produced in the present invention.

Subsequently in the present invention, the electrolytic solution is injected into the container, and then impregnated into the electric double layer capacitor cell, together with a manipulation of removing the gas adsorbed to polarizable electrodes by means of pressure reduction process about the inside of the container is carried out. The above procedure enables the electrolytic solution to efficiently impregnate into the laminated article. Further, in order for electrolytic decomposition and removal of moisture and functional group contained in the polarizable electrode during the time between the injection of the electrolytic solution and sealing of the container, an electrolytic refining by flowing electric current to the electrode terminal of the electrode terminal member may be conducted.

Afterwards, seal of the container may be carried out by, for example, pressing two heated heat-seal bars to the aperture of the container under the situation of inserting the flat container made of plastic and metal foil between the two heated heat-seal bars, resultantly an electric double layer capacitor of the present invention having structure as shown in FIG. 3 is to be obtained. Additionally in the present invention, during the time between the injection of the electrolytic solution and sealing of the container, the procedure is conducted under pressure reduction or under an inert gas atmosphere.

In the following examples are described several preferred embodiments to concretely illustrate the invention, however, it is to be understood that the invention is not intended to be limited to the specific embodiments.

### Example 1

### (Preparation of Coating solution)

Activated carbons (trade name: Activated Carbon A-BAC-PW15, available from Kureha Chemical Industry Co., Ltd.) in an amount of 100 parts by weight, carbon blacks (trade name: DENKA BLACK, available from DENKI KAGAKU KOGYO KABUSHIKI KAISHA) in an amount of 10 parts by weight, synthesized pitch (trade name: AR Pitch, available from MITSUBISHI GAS CHEMICAL COMPANY, INC.) in an amount of 5 parts by weight, butyl acrylate as an organic monomer in an amount of 75 parts by weight and ethyleneglicolemonomethyl ether as a solvent in an amount of 150 parts by weight were placed into a reaction vessel with a stirrer. In the operation, the synthesized pitch was prepared by polymerizing condensed polycyclic hydrocarbons under the presence of hydrogen fluoride and boron trifluoride. Subsequently, inside of the vessel was atmospherically replaced with nitrogen gas and then, azobisisobutyronitrile in an amount of 5 parts by weight was placed into the vessel dividedly in many times, elevating the temperature by heating to a temperature at which azobisisobutyronitrile generates radical or higher, together with stirring the solution to resultantly complete the garft polymerization reaction.

Although an existence of hard mud lumps was recognized at the beginning of the graft polymerization, a flowing ability revealed in the middle of the reaction and the solution became to a state of slurry capable of easily being stirred. A rate of reaction about the monomer was determined quantitatively by means of gas chromatography, and the reaction was recognized as termination when the rate of reaction reached to 99 % or greater. As a result of measuring a total graft polymerization factor of butyl acrylate after the termination of the reaction to the activated carbon, the carbon black and the synthesized pitch, it was determined as about 12 %. In addition, a calculated value about the non-volatile component of slurry was about 55 %.

The resultant slurry was a coating solution with extremely favorable dispersion stability without any flocculation of the activated carbon, the carbon black, the pitch and so on even after leaving it statically for a day.

Additionally, the measurement of the graft polymerization factor was conducted in a following procedure. In the beginning, a dispersing property of the graft polymers to the solvent was deleted by heat-treating the slurry prepared in the above procedure, and subsequently with a use of Soxhlet extractor, homopolymer was extracted by tetrahydrofuran. At a time that nothing was extracted, the slurry was taken out and dried. Weighing a small amount of the remained slurry, it was heat-treated at the temperature or higher than the decomposition temperature of butyl acrylate and the residue was weighed, and the used rate (% by weight) to grafted substance of butyl acrylate was defined as the graft polymerization factor.

### (Production of electrode sheet)

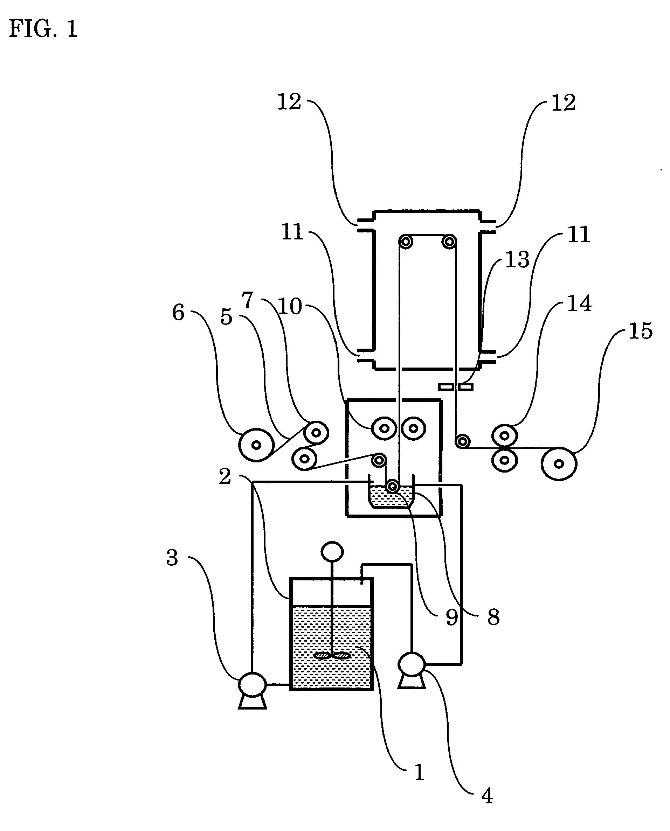

The coating solution prepared in the above procedure was applied over the surfaces of aluminum foil with a width of 150 mm and a thickness of 30 *µ*m further having a seal on a part to be a lead part of the electrode sheet, by means of a coating apparatus as shown in FIG. 1. The unwinding velocity and the winding velocity of the aluminum foil were equally 0.5 m/minute. Further, drying air at a temperature of 150 °C was introduced from a hot wind inlet into a drying section. Still further, the wound roll was heat-treated in a heat-treating furnace for 30 minutes and then, the seal was peeled apart from the coated foil. Subsequently, the coated foil was cut into a configuration as shown in FIG. 2, and an electrode sheet having polarizable electrodes with a thickness of 100 *µ* m formed over the surfaces of a collector was obtained.

Adhesion strength between the aluminum foil (i.e., collector) and the coated film (i.e., polarizable electrodes) both of the resultant electrode sheet was measured in accordance with JIS K 5600-5-6: measuring method of mechanical strength. The coated part where the coating solution is applied in the electrode sheet was partially slit into six lines longitudinally and laterally respectively. Then, a release test peeling the coated film from the aluminum foil of central 25 pieces of sample divided lattice-wise was carried out with a use of adhesive tape named Cello Tape (registered mark). As a result, it was unable to release the coated film (i.e., polarizable electrodes) from the aluminum foil (i.e., collector) about all the samples.

### (Fabrication of electric double layer capacitor)

A square laminated article (thickness: 10.2 mm) having one side of 100 mm except a lead part was formed by laminating alternately 30 sheets each of the electrode seat produced as described before and a separator (thickness: 50 *µ*m) made of paper in a manner that each lead part connects to electrode terminal of positive electrode and negative electrode respectively and alternately. Next, both the lead part of the positive electrode and the lead part of the negative electrode in the laminated article were bonded to the electrode terminal of each electrode terminal member by welding respectively and then, they were dried under reduced pressure at the temperature of 160 °C for 24 hours with a use of a vacuum dryer.

Further, a square flat container made of aluminum foil as a substrate whose surface is covered with plastic film and having sides of 150 mm long was dried under reduced pressure and at the temperature of 105 °C for 15 hours with a use of a vacuum dryer. The flat container had an aperture in one side.

After cooling both the laminated article and the flat container under the atmosphere of nitrogen gas down to room temperature, the laminated article was inserted into the container as shown in FIG. 3. Subsequently, an electrolytic solution prepared by dispersing ammonium salt or so into propylene carbonate solvent was injected into the flat container in an amount of 90 milliliter through the aperture of the container. After finishing the injection of the electrolytic solution, the laminated article was processed under reduced pressure by reducing the pressure for 30 minutes with a use of a vacuum pump. During the pressure reduction, flowing electric current to the electrode terminal and electrolytic refining was carried out. Afterwards, the aperture of the container was heat-sealed at the temperature of 150 °C , resultantly sealing up the flat container and an electric double layer capacitor was obtained. As a result of measuring electrostatic capacity and internal resistance of the electric double layer capacitor at the temperature of 25 °C and charging with 2.7 Volt, they were 960 F and 3.0 m Ω respectively, verifying that the characteristics were superior.

### Example 2

### (Preparation of Coating Solution)

Activated carbons (trade name: Activated Carbon A―BAC―PW15, available from Kureha Chemical Industry Co., Ltd.) in an amount of 100 parts by weight, carbon blacks (trade name: DENKA BLACK, available from DENKI KAGAKU KOGYO KABUSHIKI KAISHA) in an amount of 10 parts by weight, butyl acrylate as an organic monomer in an amount of 75 parts by weight and ethyleneglicolemonomethyl ether as a solvent in an amount of 150 parts by weight were placed into the same reaction vessel with Example 1. Subsequently, inside of the vessel was atmospherically replaced with nitrogen gas and then, azobisisobutyronitrile in an amount of 5 parts by weight was placed into the vessel dividedly in many times, elevating the temperature by heating to a temperature at which azobisisobutyronitrile generates radical or higher, together with stirring the solution to resultantly complete the graft polymerization reaction.

Although an existence of hard mud lumps was recognized at the beginning of the graft polymerization similarly as Example 1, a flowing ability revealed in the middle of the reaction and the solution became to a state of slurry capable of easily being stirred. A rate of reaction about the monomer was determined quantitatively by means of gas chromatography, and the reaction was recognized as termination when the rate of reaction reached to 99 % or greater. As a result of measuring a total graft polymerization factor of butyl acrylate after the termination of the reaction to the activated carbon and the carbon black, it was determined as about 11 %. In addition, a calculated value about the non-volatile component of slurry was about 55 %.

The resultant slurry was a coating solution with extremely favorable dispersion stability without any flocculation of the activated carbon, the carbon black and so on even after leaving it statically for a day. Adding epoxy resin (trade name: EP 815 available from Japan Epoxy Resins Co., Ltd.) as a binder in an amount of 5 part by weight, further adding solvent, antifoamer, etc., into the slurry, a coating solution with a predetermined concentration was obtained.

### (Production of electrode sheet)

An electrode sheet having polarizable electrodes with a thickness of 100 *µ* m formed over the surfaces of a collector was produced in the same manner as Example 1 except that the above coating solution was applied over the surfaces of the aluminum foil. Adhesion strength between the aluminum foil (i.e., collector) and the coated film (i.e., polarizable electrode) both of the resultant electrode sheet was measured under the same condition as Example 1 in accordance with JIS K 5600-5-6: measuring method of mechanical strength. As a result, it was unable to release the coat film (i.e., polarizable electrodes) from the aluminum foil (i.e., collector) about all the samples.

### (Fabrication of electric double layer capacitor)

An electric double layer capacitor was fabricated in the same manner as Example 1 except that the above electrode sheet was adopted. As a result of measuring electrostatic capacity and internal resistance of the electric double layer capacitor at the temperature of 25 °C and charging with 2.7 Volt, they were 940 F and 3.2 m Ω respectively, verifying that the characteristics were superior.

### Comparative Example 1

### (Preparation of Coating solution)

Activated carbons (trade name: Activated Carbon A―BAC―PW15, available from Kureha Chemical Industry Co., Ltd.) in an amount of 100 parts by weight, carbon blacks (trade name: DENKA BLACK, available from DENKI KAGAKU KOGYO KABUSHIKI KAISHA) in an amount of 10 parts by weight, synthesized pitch (trade name: AR Pitch, available from MITSUBISHI GAS CHEMICAL COMPANY, INC.) in an amount of 5 parts by weight and ethyleneglicolemonomethyl ether as a solvent in an amount of 150 parts by weight were placed into the same reaction vessel as Example 1. In the operation, the synthesized pitch was prepared by polymerizing condensed polycyclic hydrocarbons under the presence of hydrogen fluoride and boron trifluoride. Although the resultant solution was stirred with heating, any slurry-like coating solution with good dispersing ability was not obtained because the activated carbons, carbon blacks and the synthesized pitches tended to mutually cohere or flocculate.

### (Production of electrode sheet)

An electrode sheet having polarizable electrodes with a thickness of 100 *µ* m formed over the surfaces of a collector was produced in the same manner as Example 1 except that the above coating solution was applied over the surfaces of the aluminum foil.

Adhesion strength between the aluminum foil (i.e., collector) and the coated film (i.e., polarizable electrodes) both of the resultant electrode sheet was measured under the same condition as Example 1 in accordance with JIS K 5600-5-6: measuring method of mechanical strength. As a result, the coat film (i.e., polarizable electrodes) released from the aluminum foil (i.e., collector) about 11 samples among all 25 samples.

### Comparative Example 2

### (Preparation of Coating solution)

Activated carbons (trade name: Activated Carbon A-BAC-PW15, available from Kureha Chemical Industry Co., Ltd.) in an amount of 100 parts by weight, carbon blacks (trade name: DENKA BLACK, available from DENKI KAGAKU KOGYO KABUSHIKI KAISHA) in an amount of 10 parts by weight and ethyleneglicolemonomethyl ether as a solvent in an amount of 150 parts by weight were placed into the same reaction vessel as Example 1. Although the resultant solution was stirred with heating, any slurry-like coating solution with good dispersing ability was not obtained because the activated carbons and the carbon blacks tended to mutually cohere or flocculate.

### (Production of electrode sheet)

An electrode sheet having polarizable electrodes with a thickness of 100 *µ* m formed over the surfaces of a collector was produced in the same manner as Example 1 except that the above coating solution was applied over the surfaces of the aluminum foil. Adhesion strength between the aluminum foil (i.e., collector) and the coated film (i.e., polarizable electrodes) both of the resultant electrode sheet was measured under the same condition as Example 1 in accordance with JIS K 5600-5-6: measuring method of mechanical strength. As a result, the coated film (i.e., polarizable electrode) released from the aluminum foil (i.e., collector) about 19 samples among all 25 samples.

As described above, it was verified that the electrode sheet produced in Examples of the present had its collector and its polarizable electrode bonded tightly. Further, it was also verified that the electric double layer capacitor fabricated with the use of the electrode sheet in Examples of the present invention was superior in electrostatic capacity and internal resistance.

### INDUSTRIAL APPLICABILITY

In the coating solution of the present invention, the graft polymer hardly coheres mutually, with unreacted activated carbons or with carbon blacks and resultantly each particle will finely disperse in a solvent. Further, the coating solution is extremely superior in wetting property with the surfaces of metals such as an aluminum foil, etc. Therefore, the coating solution of the present invention may be sufficiently permeable even into valleys on the rough surface of collectors made of metal foils such etched aluminum foils. Accordingly, the electrode sheet of the present invention with the use of the coating solution is remarkably improved in the adhesion strength between its collector and the polarizable electrodes more than a conventional electrode sheet. Furthermore, the electric double layer capacitor of the present invention with the use of the electrode sheet is capable of maintaining characteristics such as internal resistance and so on favorably for a long term even with the use under repetition of charging and discharging electricity, under oscillation or so.

While there has been shown and described what are at present considered the preferred embodiments of the invention, it will be obvious to those skilled in the art that various changes and modification may be made therein without departing from the scope of the invention defined by the appended claims.

## Claims

1. An electrode sheet which is made by applying a coating solution prepared by dispersing a graft polymer which is obtained by graft polymerizing an organic monomer and at least one of activated carbon and carbon black into a solvent over surfaces of a collector followed by drying and heat-treating.

2. The electrode sheet according to Claim 1, wherein a graft polymerization factor of said organic monomer to said activated carbon falls within a range of from 1 to 50 % of entire organic monomers.

3. The electrode sheet according to Claim 1, wherein a graft polymerization factor of said organic monomer to said carbon black falls within a range of from 1 to 50 % of entire organic monomers.

4. The electrode sheet according to Claim 1, wherein said activated carbon is prepared employing synthesized pitches obtained by polymerizing either condensed polycyclic hydrocarbons or compounds comprising condensed polycyclic hydrocarbons as materials.

5. The electrode sheet according to Claim 1, wherein said coating solution further comprises a resin.

6. The electrode sheet according to Claim 5, wherein said resin is at least one kind selected from a group consisting of epoxy resin, phenol resin, polyester resin, melamine resin, urea resin, alkyd resin and polyimide resin.

7. The electrode sheet according to Claim 1, wherein said coating solution further comprises a graft polymer obtained by graft polymerizing an organic monomer and a synthesized pitch obtained by polymerizing either a condensed polycyclic hydrocarbon or a compound comprising a condensed polycyclic hydrocarbon.

8. The electrode sheet according to Claim 1, wherein said organic monomer is at least one kind selected from a group consisting of acryl-based monomer, epoxy-based monomer, vinyl-based monomer, ester-based monomer, amide-based monomer and ether-based monomer.

9. The electrode sheet according to Claim 1, wherein said solvent is is at least one kind selected from a group consisting of aliphatic alcohols, ketones, aromatic hydrocarbons, aromatic hydrocarbons containing nitrogen, aliphatic hydrocarbons, alicyclic hydrocarbons, ethers and cellosolves.

10. The electrode sheet according to Claim 1, wherein a content of said graft polymer falls within a range of 1 to 50 % by weight to a total amount of said coating solution.

11. An electric double layer capacitor having a constitution of laminating a separator and the electrode sheet according to any one of Claims 1 to 10, impregnated with a non-aqueous electrolytic solution.
